(19) Europäisches Patentamt
European Patent Office
Office européen des brevets

(11) **EP 2 757 531 A1**

(12) **EUROPEAN PATENT APPLICATION**

(43) Date of publication:
**23.07.2014 Bulletin 2014/30**

(51) Int Cl.:
***G06T 7/20*** *(2006.01)*

(21) Application number: **14151771.4**

(22) Date of filing: **20.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.01.2013 LU 92138**

(71) Applicant: **Neo Medical Systems S.A.**
**1118 Luxembourg (LU)**

(72) Inventors:
• **Scalais, François**
**1118 Luxembourg (LU)**

• **Fradier, Emmanuel**
**68200 Mulhouse (FR)**
• **Stricker, Didier**
**67659 Kaiserslautern (DE)**
• **Schmitz, Norbert**
**66497 Contwig (DE)**

(74) Representative: **Watterson, Peer Marten John**
**Marks & Clerk (Luxembourg)**
**B.P. 1775**
**1017 Luxembourg (LU)**

(54) **Head tracking method and device**

(57) The invention extends to a tracking device for tracking a position of a moving object such as a human head or eyes, the device comprising a camera, a radiation source radiating electro-magnetic radiation, and a processor for calculating variables indicative of the position of an object relative to the camera, wherein the camera is adapted to capture images using illumination provided by the radiation source, wherein the radiation source comprises a source of infrared radiation and the camera comprises a monocular image input. Further aspects of the invention relate to an associated method for tracking a moving object; to quickly sorting a set of competing models of the users head; the use of threshold conversion to distinguish characteristics of captured images, and controlling the output of a three dimensional display in dependence on the tracked position of a user's head.

Fig 1

Description

## TECHNICAL FIELD

This invention relates to a method and device for tracking the position of a user's head and a related device. In particular, embodiments of the invention relate to altering a three dimensional display according to the position of a user.

## BACKGROUND

A number of different methods of displaying three dimensional images to a user are known. In a common implementation, used in public cinemas, the left and right eyes of the user are presented with different information at successive time periods. In such an implementation, the user is presented with a movie where alternate frames are intended for alternate eyes. The disadvantage of such implementations is that some way of distinguishing between the information intended for the right eye from the information intended for the left eye is needed. Often this is done with means of a set of glasses worn by the user which distinguish the different information sets through the use of polarisation or alternate occlusion.

An alternate implementation of 3D display simultaneously transmits different information to the left and right eyes (autostereoscopy). An example of such a system is the use of a lenticular screen overlaid on a display. The display and lenticular screen are arranged so each pixel is either presented to the left or the right eye and this allows the simultaneous projection of different information to the two eyes, resulting in the user experiencing stereoscopic vision.

The advantages of such systems which are capable of projecting stereoscopic information is that the user does not need to carry glasses which are unwieldy and can become uncomfortable, specifically over long periods of time.

A growing field for the use of 3D display technology is in the operating theatre. In particular, where a surgeon is engaged in laparoscopy or other surgical techniques where the surgeon is not directly able to view the interaction between the surgical instruments and the patient being operated on. In such applications, a depth of field perception is important for the surgeon as this may assist in helping the surgeon evaluate distances in the area being operated on.

Furthermore, in surgery, significant disadvantages exist in the use of glasses and, in particular glasses used for 3D displays. Firstly, the surgeon is unable to touch his own glasses due to concerns relating to contact infection (sterility is mandatory). In particular, once the glasses become fogged the surgeon must ask an assistant to clear the glasses as he or she is unable to touch the glasses. Secondly, due to the polarisation employed in many glasses used for 3D display, such glasses cut out a significant portion of the ambient light and therefore the surgeon will require the operating theatre lights to be turned on when viewing anything other than the display (instruments, compress, etc.). Thirdly, as noted, prolonged use of these glasses can become uncomfortable, particularly where the surgeon also requires corrective eye glasses.

For these reasons a 3D display which does not require glasses is to be preferred in the environment of the operating theatre. However, the problem with a glasses-free implementation such as one using a lenticular overlay is that as the user's head moves relative to the display, the 3D effect is disturbed or lost. In order to solve this problem it is known to switch the left- and right-eye information for the lenticular display to compensate for left and right movement of the user's head. This may be based on a tracked movement of the user's head.

However, all such head-tracking technologies have been designed to operate at normal working distances between the user and the display (i.e. a distance of about 700 mm away from the display when the user sits in front of the display at a desk). Furthermore, known implementations assume that the ambient light is at normal working levels, whereas in an operating theatre, the ambient light is significantly lower than in other working environments.

It should also be noted that in the operating theatre environment it is important that the position of the head be tracked reliably. Many prior applications have a relatively large tolerance in discrepancies between the actual and calculated positions of the user's head. However, for a surgeon such lag is unacceptable; any perceived lag could have very serious consequences.

## SUMMARY

A first aspect of the invention relates to a tracking device for tracking a position of a user's head, the device comprising a camera, a radiation source radiating electro-magnetic radiation, and a processor for calculating parameters indicative of the position of the head relative to the camera, wherein the camera is adapted to capture images using illumination provided by the radiation source, wherein the radiation source comprises a source of infrared radiation and the camera comprises a monocular image input, characterised in that
the tracking device further comprises a display adapter for controlling a three dimensional display, the display adapter being connected to the processor, wherein the display adapter is adapted to control a three dimensional display in dependence on the calculated variables indicative of the position of the head.

The processor may be adapted to designate an area of a captured image as the head on the basis of recognising one or more eyes of the head.

The processor may be adapted to designate an area of a captured image as the head on the basis of recognising one or more tracking markers attached to the head.

The processor may be adapted to recognise a user according to the presence of a recognition marker.

The processor may be adapted to control the display adapter to display three dimensional information when a user is recognised and display two dimensional information when a user is not recognised.

The user may be recognised by the recognition marker.

The tracking marker or the recognition markers may comprise one or more markers adhered to clothing. The markers may be comprised of a material which reflects infra-red light.

The camera may capture successive images and each image may correspond to an illumination of the head by the radiation source.

The radiation source may radiate electromagnetic radiation predominantly as infrared radiation.

The radiation source may comprise two sets of infrared light sources arranged so that a first set is closer to the camera than a second set.

The radiation source may be adapted to alternate the activation of the first set and the second set. Alternatively, both sets may be activated at the same time.

Recognition of a user's head may be based on images captured when the first set is illuminated. Tracking of a user's head may be based on images captured when the second set is activated. Each set may comprise two LEDs. Each of the LEDs of the first set may be closer to the camera than each of the LEDs of the second set.

The processor may be adapted to compare an image captured when the first set is activated, and the second set is not activated, to an image captured when the second set is activated and the first set is not activated. This may be the case when a three-dimensional model of the head is used. Alternately, if the sets are activated simultaneously, the processor may compare two images captured at different times.

The processor may be adapted to process images captured when the first set of infrared light sources is activated for information relating to the recognition and/or tracking markers.

The radiation source may radiate radiation with wavelengths between 750 nm and 950 nm.

The processor may be adapted to generate a model corresponding to the object and evaluate a likelihood that the model represents the object and the processor may be further adapted to perform the evaluation of the likelihood using a threshold conversion of one or more regions of the image.

The processor may be adapted to designate regions of one or more images captured by the camera as regions corresponding to the eyes and the at least one other characteristic of the head, and perform a threshold conversion on said portions of said images.

The threshold conversion may comprise identifying a colour value of a central part of a designated region and converting image information of said part on the basis of said identified colour value.

The threshold conversion may comprise converting to black and white image information.

The model may comprises a three dimensional model of the head.

The three dimensional model of the head may comprise three dimensional locations for two eyes and one or more markers. Preferably, the model comprises three markers arranged in a triangular pattern. The markers may be tracking markers or recognition markers.

The processor may be adapted to produce a plurality of models arranged in a first list, each model being representative of a change in position of the object, and select one or more models from said plurality of models to correspond to a change in position of the object, wherein the processor may be further adapted to select the one or more models on the basis of:

    ascribing a weight to each of the plurality of models;
    creating an indexed list of the first list of the plurality of models by indexing each model in accordance with a weight of each model; and
    performing a binary search on the indexed list.

The indexed list may be created by setting the index of a model equal to a sum of weights of the index and all preceding indices in the first list.

The tracking device may further comprise predicting a change in position of the object in dependence on the calculated variables.

The prediction may be based on the selected models.

The camera may capture a single image of the object at a time.

The camera may have a maximum resolution of 2500 by 1800 pixels with a frame rate of 100 frames per second.

The radiation source may comprise two sets of infrared light sources arranged so that a first set is closer to the camera than a second set. The radiation source may be adapted to alternate the activation of the first set and the second set, the processor being adapted to compare an image captured when the first set is activated, and the second set is not activated, to an image captured when the second set is activated and the first set is not activated. This may be the case where a three dimensional model is used. Alternatively, both sets are illuminated simultaneously. This may be the case when a two dimensional model is used.

The model may be a two dimensional model.

The processor may comprise a central processing unit connected to a memory storing a computer program, the central processing unit being adapted to process the computer program to carry out any of the method claims contained herein.

A further aspect of the invention extends to a system for displaying three dimensional information comprising a tracking device as described and a three dimensional display wherein the three dimensional display is connected to the display adapter.

The three dimensional display may be an autostereoscopic display for simultaneously displaying a left-eye image and a right-eye image, wherein the processor may be adapted to swap the left-eye image and the right-eye image in dependence on the location of the user's head relative to the three dimensional display.

The tracking device may be for detecting the position of a user's head in an operating theatre. In this application, the camera may be a video camera having a frame rate of 100 frames per second where alternate frames are used as on-axis and off-axis images, and the radiation source may comprise IR LEDs which do not emit substantial radiation in the visible spectrum.

In an embodiment, the tracking device may be adapted to track the position of the heads of two or more users. In this embodiment, the processor may be adapted to recognise a shape of a marker and wherein the users are distinguished by a shape of the corresponding marker worn by each user.

A further aspect of the invention extends to a method of tracking a position of a user's head comprising:

activating the user's head using radiation emitted by a radiation source;
capturing images of the user's head using a camera; wherein the radiation source comprises a source of infrared radiation and the camera comprises a monocular image input,
calculating parameters indicative of the position of the head relative to the camera, the method characterised by:

controlling a three dimensional display in dependence on the calculated parameters.

The method may further comprise designating an area of a captured image as the head on the basis of recognising: one or more eyes of the head.

The head may be recognised on the basis of recognising one or more tracking markers attached to the head.

The method may further comprise recognising a user according to the presence of a recognition marker.

The method may further comprise displaying three dimensional information when a user is recognised and displaying two dimensional information when a user is not recognised. The user may be recognised by the recognition marker.

Further, or alternatively, the display may be switched from displaying three dimensional information to displaying two dimensional information when tracking of the head is lost.

The tracking markers and/or the recognition markers comprise one or more markers adhered to clothing.

The method may further comprise capturing successive images wherein each image corresponds to an illumination of the head by the radiation source.

The radiation source may radiate electromagnetic radiation predominantly as infrared radiation.

The radiation source may comprise two sets of infrared light sources arranged so that a first set is closer to the camera than a second set, the method comprising alternating the activation of the first set and the second set.

The method may further comprise comparing an image captured when the first set is activated, and the second set is not activated, to an image captured when the second set is activated and the first set is not activated.

The method may further comprise processing images captured when the first set of infrared light sources is activated for information relating to the recognition and/or tracking markers.

The radiation source may radiate radiation with wavelengths between 750 nm and 1 mm.

The method may further comprise generating a model corresponding to the object and evaluating a likelihood that the model represents the object, wherein the evaluation of the likelihood may involve using a threshold conversion of one or more regions of the image.

The method may further comprise designating regions of one or more images captured by the camera as regions corresponding to the eyes and the at least one other characteristic of the head, and performing a threshold conversion on said portions of said images.

The threshold conversion may comprise identifying a colour value of a central part of a designated region and converting image information of said part on the basis of said identified colour value.

The threshold conversion may comprise converting to black and white image information.

The model may comprise a three dimensional model of the head.

The three dimensional model of the head may comprise three dimensional locations for two eyes and one or more markers.

The method may further comprise producing a plurality of models arranged in a first list, each model being representative of a change in position of the object, and selecting one or more models from said plurality of models to correspond to a change in position of the object, wherein the processor is adapted to select the one or more models on the basis of:

ascribing a weight to each of the plurality of models;
creating an indexed list of the first list of the plurality of models by indexing each model in accordance with a weight of each model; and
performing a binary search on the indexed list.

The indexed list may be created by setting the index of a model equal to a sum of weights of the index and all preceding indices in the first list.

The method may further comprise predicting a change in position of the object in dependence on the calculated variables.

The prediction may be based on the selected models.

The method may comprise capturing a single image of the object at a time.

The radiation source may comprise two sets of infrared light sources arranged so that a first set is closer to the camera than a second set, the radiation source being adapted to alternate the activation of the first set and the second set, the method comprising comparing an image captured when the first set is activated, and the second set is not activated, to an image captured when the second set is activated and the first set is not activated.

A further aspect of the invention comprises determining a region corresponding to a marker by performing a threshold conversion on a pixel representation of that region. The pixel representation may be coded in a greyscale colour scale. In this case, the method may comprise determining a greyscale colour value of a central pixel of the region and designating this as c. The method may further comprise converting all pixels with a colour value less than c - 1 to a first colour and all pixels with a colour value more than c - 1 to a second colour. The first colour may be white and the second colour may be black. Alternatively, the first colour may be black and the second colour may be white.

A further aspect of the invention extends to evaluating a plurality of models which involves calculating a weighting for each model, generating a list of all of the models designated by their respective weightings, generating an indexed list wherein each index of the indexed list corresponds to a sum of all preceding weights, and wherein the indexed list is sorted by a binary sort.

The model may be a two dimensional model.

The three dimensional display may be an autostereoscopic display for simultaneously displaying a left-eye image and a right-eye image, and wherein controlling the three dimensional display in dependence on the calculated parameters may comprise swapping the left-eye image and the right-eye image in dependence on the location of the user's head relative to the three dimensional display.

The following features are presented as subject-matter which is considered patentable for each feature taken individually, or in combination with the features referred to. The applicant reserves the right to present any or all of these features as claims.

1. A tracking device for tracking a position of a user's head, the device comprising a camera, a radiation source radiating electro-magnetic radiation, and a processor for calculating parameters indicative of the position of the head relative to the camera, wherein the camera is adapted to capture images using illumination provided by the radiation source, wherein the radiation source comprises a source of infrared radiation and the camera comprises a monocular image input, characterised in that
the tracking device further comprises a display adapter for controlling a three dimensional display, wherein the display adapter is adapted to control a three dimensional display in dependence on the calculated variables indicative of the position of the head.

2. The tracking device according to feature 1 wherein the processor is adapted to designate an area of a captured image as the head on the basis of recognising one or more eyes of the head.

3. The tracking device according to feature 2 wherein the processor is adapted to designate an area of a captured image as the head on the basis of recognising one or more tracking markers attached to the head.

4. The tracking device according to any preceding feature wherein the processor is adapted to recognise a user according to the presence of a recognition marker.

5. The tracking device according to any preceding feature wherein the processor is adapted to control the display adapter to display three dimensional information when a user is recognised and display two dimensional information when a user is not recognised.

6. The tracking device according to feature 4 or feature 5 wherein the tracking marker or the recognition markers comprise one or more markers adhered to clothing.

7. The tracking device according to any preceding feature wherein the camera captures successive images and wherein each image corresponds to an illumination of the head by the radiation source.

8. The tracking device according to feature 7 wherein the radiation source radiates electromagnetic radiation predominantly as infrared radiation.

9. The tracking device according to any preceding feature wherein the radiation source comprises two sets of infrared light sources arranged so that a first set is closer to the camera than a second set.

10. The tracking device according to feature 9 wherein the processor is adapted to compare an image captured when the first set is activated, and the second set is not activated, to an image captured when the second set is activated and the first set is not activated.

11. The tracking device according to feature 9 or feature 10 wherein the processor is adapted to process images captured when the first set of infrared light sources is activated for information relating to the recognition and/or tracking markers.

12. The tracking device according to any preceding feature wherein the processor is adapted to generate a model corresponding to the object and evaluate a likelihood that the model represents the object and wherein the processor is adapted to perform the evaluation of the likelihood using a threshold conversion of one or more regions of the image.

13. The tracking device according to feature 12, wherein said model comprises a three dimensional model of the head.

14. The tracking device according to feature 13 wherein the three dimensional model of the head comprises three dimensional locations for two eyes and one or more markers.

15. The tracking device according to any of features 12 to 14 wherein the processor is adapted to produce a plurality of models arranged in a first list, each model being representative of a change in position of the object, and select one or more models from said plurality of models to correspond to a change in position of the object, wherein the processor is adapted to select the one or more models on the basis of:

ascribing a weight to each of the plurality of models;
creating an indexed list of the first list of the plurality of models by indexing each model in accordance with a weight of each model; and
performing a binary search on the indexed list.

16. The tracking device according to any one of features 1 to 11 wherein the model is a two dimensional model.

17. The tracking device according to any proceeding feature wherein the processor comprises a central processing unit connected to a memory storing a computer program, the central processing unit being adapted to process the computer program to carry out any of the method features contained herein.

18. A system for displaying three dimensional information comprising a tracking device according to any of features 1 to 17 and a three dimensional display wherein the three dimensional display is connected to the display adapter.

19. The system according to feature 18 wherein the three dimensional display is an autostereoscopic display for simultaneously displaying a left-eye image and a right-eye image, wherein the display adapter is adapted to swap the left-eye image and the right-eye image in dependence on the location of the user's head relative to the three dimensional display.

20. A method of tracking a position of a user's head comprising:

illuminating the user's head using radiation emitted by a radiation source;
capturing images of the user's head using a camera; wherein the radiation source comprises a source of infrared radiation and the camera comprises a monocular image input,
calculating parameters indicative of the position of the head relative to the camera, the method characterised by:

controlling a three dimensional display in dependence on the calculated parameters.

21. The method according to feature 20 comprising designating an area of a captured image as the head on the basis of recognising: one or more eyes of the head.

22. The method according to feature 21 wherein the head is recognised on the basis of recognising one or more tracking markers attached to the head.

23. The method according to any of features 20 to 22 further comprising recognising a user according to the presence of a recognition marker.

24. The method according to any of features 20 to 23 further comprising displaying three dimensional information when a user is recognised and displaying two dimensional information when a user is not recognised.

25. The method according to feature 23 or feature 24 wherein the tracking markers and/or the recognition markers comprise one or more markers adhered to clothing.

26. The method according to any of features 20 to 25 comprising capturing successive images wherein each image corresponds to an illumination of the head by the radiation source.

27. The method according to feature 26 wherein the radiation source radiates electromagnetic radiation predominantly as infrared radiation.

28. The method according to any of features 20 to 27 wherein the radiation source comprises two sets of infrared light sources arranged so that a first set is closer to the camera than a second set.

29. The method according to feature 28 comprising comparing an image captured when the first set is activated, and the second set is not activated, to an image captured when the second set is activated and the first set is not activated.

30. The method according to feature 28 or feature 29 further comprising processing images captured when the first set of infrared light sources is activated for information relating to the recognition and/or tracking markers.

31. The method according to any of features 20 to 30 further comprising generating a model corresponding to the object and evaluating a likelihood that the model represents the object and wherein the evaluation of the likelihood involves using a threshold conversion of one or more regions of the image.

32. The method according to feature 31, wherein said model comprises a three dimensional model of the head.

33. The method according to feature 32 wherein the three dimensional model of the head comprises three dimensional locations for two eyes and one or more markers.

34. The method according to any of features 31 to 33 further comprising producing a plurality of models arranged in a first list, each model being representative of a change in position of the object, and selecting one or more models from said plurality of models to correspond to a change in position of the object, wherein the processor is adapted to select the one or more models on the basis of:

ascribing a weight to each of the plurality of models;
creating an indexed list of the first list of the plurality of models by indexing each model in accordance with a weight of each model; and

performing a binary search on the indexed list.

35. The method according to feature 34 wherein the model is a two dimensional model.

36. The method according to any of features 20 to 35 wherein the three dimensional display is an autostereoscopic display for simultaneously displaying a left-eye image and a right-eye image, and wherein controlling the three dimensional display in dependence on the calculated parameters comprises swapping the left-eye image and the right-eye image in dependence on the location of the user's head relative to the three dimensional display.

DESCRIPTION OF ACCOMPANYING FIGURES

Figure 1 is an illustration of a user tracking and 3D display system according to an embodiment of the invention;

Figure 2 is a schematic illustration of a camera and radiation source arrangement in an embodiment of the invention;

Figure 3 is a flow diagram of a method according to an embodiment of the invention;

Figure 4 is a rendering of a model of a user's head used with embodiments of the invention;

Figure 5 is a flow diagram of a method of head detection and tracking;

Figure 6 is a flow diagram of model generation and selection;

Figure 7 is a diagram of details of a model selection;

Figures 8a and 8b are illustrations of the results of threshold conversion on regions of an image;

Figure 9 illustrates three dimensional display zones and a user's head; and

Figure 10 illustrates a process of altering a three dimensional display.

## DESCRIPTION OF EMBODIMENTS

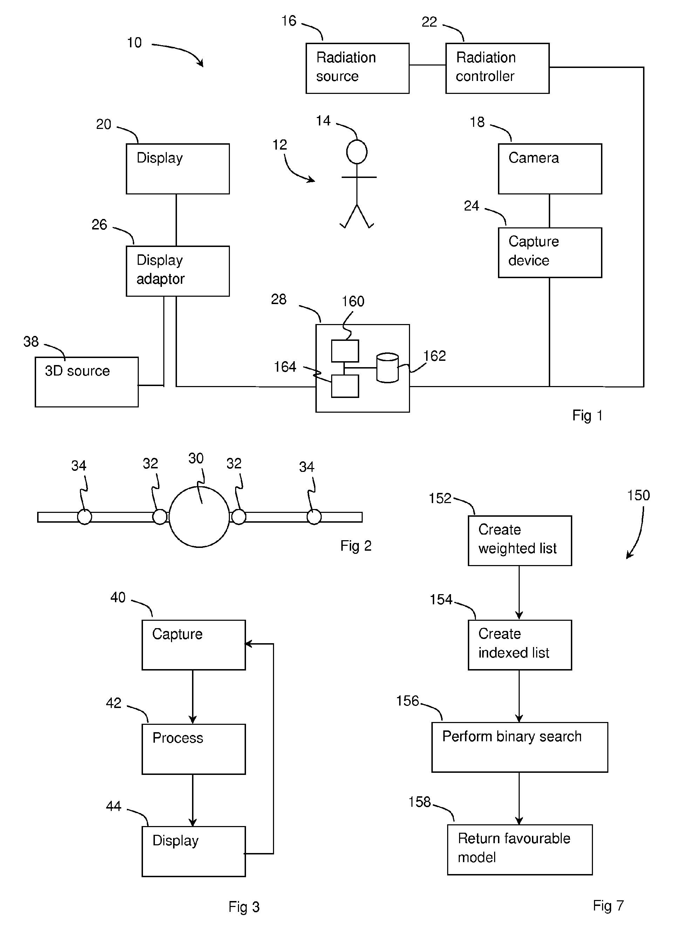

Figure 1 illustrates a user tracking and 3D display system 10 according to an embodiment of the invention. The system 10 displays three dimensional (3D) autostereoscopic images to a user 12 and to do so tracks the position of the user's head 14. The system comprises a radiation source 16 for illuminating the user 12 (and, in particular, the user's head 14). A video camera 18 captures images of the user's head 14 and the output of an autostereoscopic display 20 is altered as described below in greater detail.

The system 10 further comprises a radiation controller 22 connected to the radiation source 16 to control the manner in which the radiation source illuminates the user's head 14. A capture device 24 captures digitised images from the camera. A central processor 28 receives the captured images from the image capture device 24 and processes this information as described below. The 3D display 20 is controlled by a display adapter 26. The 3D display 20 used in this embodiment is a display with a lenticular overlay, as known in the art. This display 20 displays 3D information from a 3D source 38. The 3D source 38 may be any source of 3D information (left and right-eye information). For example in an operating theatre, the 3D source 38 may be a stereoscopic camera used for laparoscopy. The 3D source 38 is connected to the display adapter so that the 3D information from the source may be displayed on the 3D display in a known manner.

The 3D display is a lenticular display and as a user moves their head from left to right or from right to left, the 3D effect is blurred. Therefore, in embodiments of this invention, the processor tracks the position of the user's head and sends this information to the display adapter 26. The display adapter, once informed of the position of the user's head relative to the display 20 is then able to determine whether the user's perception of the 3D effect would be improved by switching the left and right-eye information.

As stated, the 3D display 20 is a lenticular display, but is to be realised that any display employing the application of optical technologies and elements (so called parallax barrier or lenticular lens panes) that ensure that each eye of the viewer sees a slightly different perspective may be used. The human brain then processes these perspectives to a spatial picture.

The central processor 28 in the embodiment illustrated is a computer comprising a CPU 160 connected to a graphics processing unit 164 and a memory 162.

It is to be realised that although various portions of the system 10 have been illustrated and described as separate devices, the actual hardware may not correspond to the blocks of Figure 1. For example, the graphics processing unit (GPU) 164 may be used for capturing images as well as for processing information relating to the head detection and tracking. Similarly, the information needed by the display adapter 26 to control the display 20 may be calculated by the processor 28 and by the display adapter 26.

The arrangement of the radiation source 16 relative to the camera 18 is illustrated in Figure 2. The camera 18 comprises a monocular image input which, in this embodiment, is a single lens 30. Many head detection and tracking systems, and other systems used to control a 3D display, use a stereoscopic input (i.e. an input which captures two images (often simultaneously) of the same scene from displaced positions). Differences in these images are then used to calculate the position of the head in the scene.

However, it is desirable for embodiments of this invention that the head detection and tracking system is capable of operating at distances exceeding the standard working distance of about 700 mm. Since one of the primary uses of embodiments of the invention relates to use in an operating theatre, a distance between a surgeon and the display will be between 1 m and 3 m. In an embodiment, compensations for movement of lateral up to 1 m are compensated for, preferably with reference to a horizontal axis of symmetry.

The use of stereoscopic input for head tracking and detection suffers from the disadvantage that such systems provide too much information to perform calculations on, particularly where a three dimensional model of the user's head is utilised (or other factors relying on significant calculations) and it is necessary to process the images at a frame rate of between 20 and 30 frames per second. In practice, using the types of radiation sources considered here, it has been found that it is necessary to process the information for a particular head position in about 20 ms, which is difficult where stereoscopic images are involved. This is particularly the case where a significant resolution is needed.

It has been found that instead of using a stereoscopic image input, a monocular image input is used and, provided that the imaging sensor has sufficient resolution, the required calculations can be performed, as described below. Therefore, in an embodiment, the video camera has a frame rate of between 80 and 120 frames per second. Preferably, the frame rate is about 100 frames per second. In these embodiments, the frame rate may also, or instead, refer to the number of images which the processor 28 is capable of processing (in other words, redundant frames could be discarded). Furthermore, it has been found that the resolution of the image produced by the camera can have a significant impact on the accuracy of the determination of the position of the user's head. This is all the more so in this case where a monocular camera is used. Preferably, the horizontal pixel resolution of the camera is such that a single pixel corresponds to 1 mm in the lateral plane of the user (although it is to be realised that some variation in this amount is inevitable as the user is able to move towards and away from the camera). In this embodiment, the resolution corresponds to between 0.5 and 1.5 cm. In the embodiment illustrated, the camera has a resolution of 2 500 (horizontal) by 1 800 pixels (vertical).

In these embodiments, for use in surgery, a minimum frame rate of 25 frames per second is needed since the update of the 3D display used by the surgeon needs to be in 'real time'. Furthermore, it is a constraint that the position of the user's head be tracked in the time available between captured images (in other words, one half of the frame rate since the procedure of embodiments of the invention rely on two frames, see below).

The display adapter 26 may be a conventional display adapter such as a graphics card (whether separate or integrated). However, for embodiments of this invention it is important that the display adapter is able to control the three dimensional display 20. To do so, it is important that the display adapter is able to swap the left eye and right eye images, or at least generate the instructions according to which this can be done. Similarly, for further embodiments, it is important that the display adapter is able to general the instructions for the display 20 to switch in between two dimensional and three dimensional modes. It is to be realised then that in an embodiment, the display adapter may be the same as the processor 28 in which case the device would include a graphics card or other means for processing the image information necessary for its display.

Figure 2 illustrates a first set of infrared light emitting diodes (LEDs) 32 arranged along a scaffolding 36. The scaffolding is arranged in a plane parallel to the plane of the lens 30 (i.e. parallel to a plane of the image sensor, not shown). The LEDs 32 are located on the scaffolding as close as convenient to the lens 30. Therefore, the LEDs 32 are referred to as the 'on-axis radiation source'. A second set of infrared LEDs 34 are arranged at a distance of 30 cm along the scaffolding 36 away from the LEDs 32. (in further embodiments this distance may be varied) The LEDs 34 are away from the lens 30 of the camera 18 and therefore are referred to as the 'off-axis radiation source'. LEDs 32 and LEDs 34 together comprise the radiation source 16 of Figure 1. In an embodiment, the LEDs 32 and LEDs 34 are OSRAM SFH 4750 LEDs which emit radiation predominately of a wavelength of 850 nm.

As illustrated in Figure 1, the radiation source 16 is connected to a radiation controller 22. In an embodiment, the radiation controller 22 is an Arduino microcontroller which controls the operation of the LEDs 32 and 34. In an embodiment, the radiation controller causes the LEDs 32 and 34 to be operated successively so that the on-axis LEDs 32 are activated while the off-axis LEDs 34 are turned off, and then the off-axis LEDs 34 are activated while the on-axis LEDs 32 are turned off. During each of these successive activations, the camera captures an image. In an alternative embodiment, all LEDs are activated simultaneously. The image corresponding to illumination by the on-axis LEDs 32 is referred to as the 'on-axis image' and the image corresponding to the off-axis LEDs 34 is referred to as the 'off-axis image'.

In the embodiment illustrated, the radiation controller 22 is connected to the processor 28 which is also connected to the capture device. In this manner the processor is able to co-ordinate the operation of the camera 18 and the radiation source 16 to ensure that the on- and off-axis images are captures at the correct times.

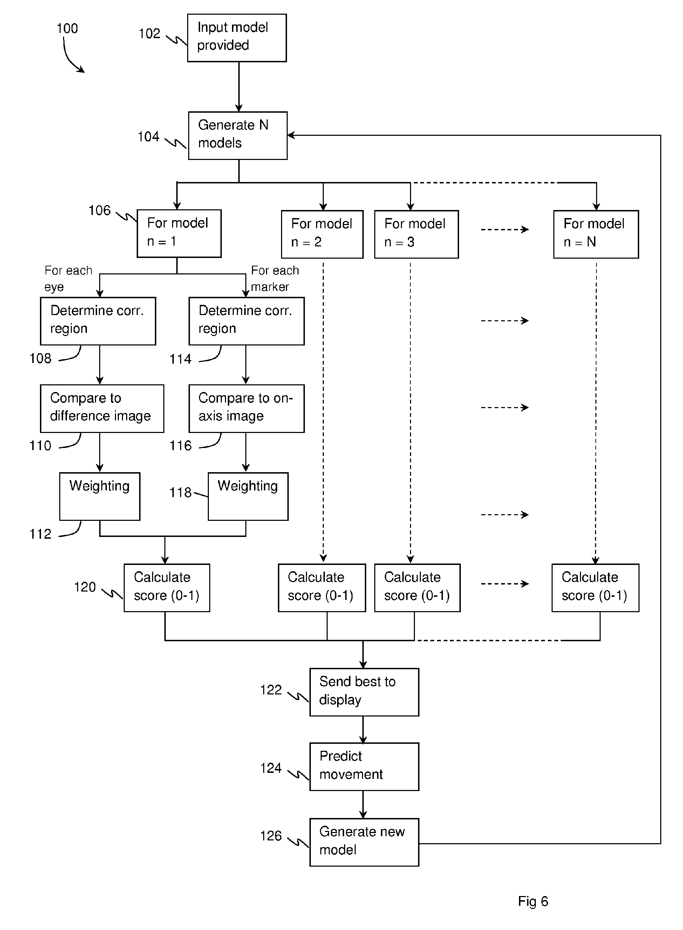

In general the process of embodiments of the invention is outlined in Figure 3. At an initial stage, stage 40, images are captured. At the next stage, stage 42, these images are processed and then, on the basis of this processing, in stage 44, the display is altered in dependence on the processed image data. The process then returns to the capture stage 40. As described above, the image capture stage 40 involves capturing the on-axis and off-axis images. The processing step 42 is described below with reference to Figures 6 and 7.

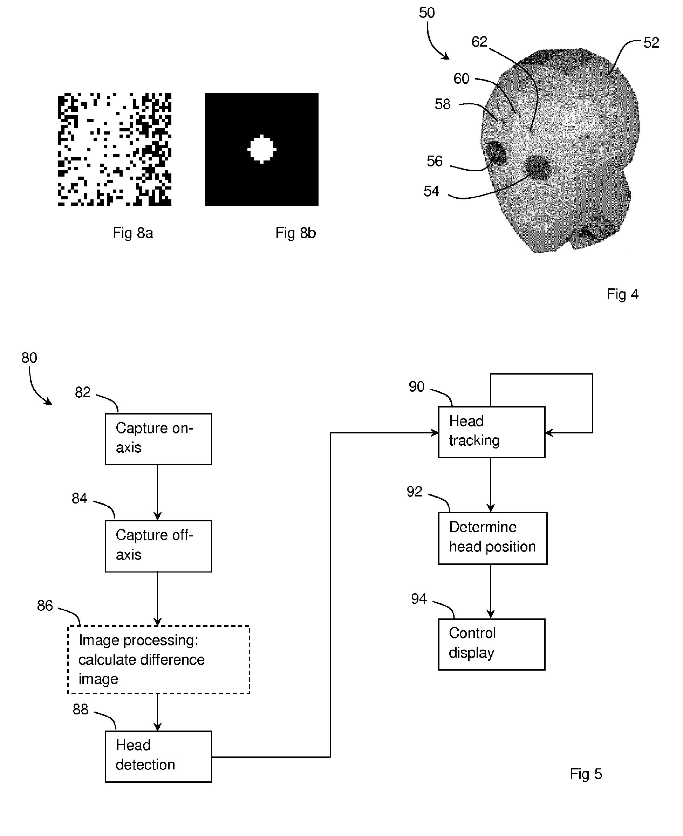

As previously mentioned, the processing of the image data according to certain embodiments relies on a three dimensional model of the user's head 14 (Figure 1). A graphical rendering of such a model 50 is illustrated in Figure 4. As illustrated, the model 50 includes a modelled head 52 having a left eye 54 and a right eye 56. Furthermore, the model 50 includes three tracking markers 58, 60 and 62 arranged in a triangle on the forehead. The tracking markers 58, 60 and 62 in the model 50 correspond to markers attached to the surgical cap of a user (surgeon). Since the application of embodiments of the invention are to the environment of an operating theatre, the users will have masks and caps and the tracking markers are, in the embodiment illustrated, attached to the cap of the user. In a further embodiment, some tracking markers may be attached to a cap and others to a mask. In a specific embodiment, the tracking markers comprise a single marker attached to the cap and two markers attached to the mask. In a further embodiment, the tracking markers comprise two markers attached to the cap, and a single marker on the mask. It has been found that three markers arranged in a triangular pattern are effective since the triangular pattern is relative easy to recognise since it can be modelled easily, while still providing a large enough area. The markers are reflective to the radiation emitted by the radiation source. In this embodiment, the markers are comprised of a material which reflects infrared radiation.

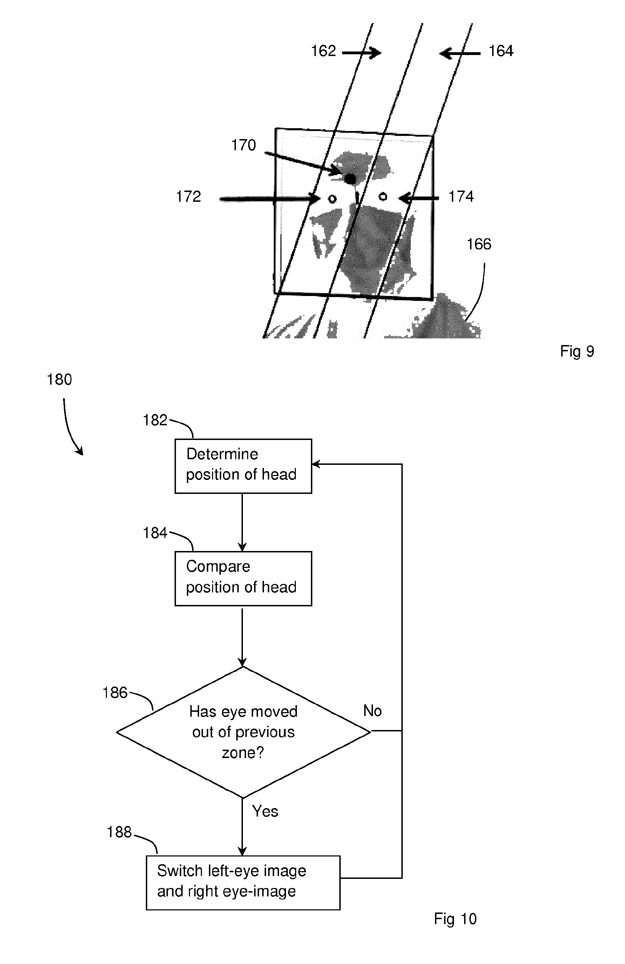

In a further embodiment, a two-dimensional model of the user's head is used. This is illustrated in Figure 9 and discussed in greater detail below. Depending on the model used and other factors in the hardware utilised, a marker to assist with the tracking is not always required. In other embodiments, a recognition marker may be used to identify the user whose head is being tracked. It is to be realised that in certain embodiments, the same marker may be used as a tracking and as a recognition marker. Furthermore, the designations 'tracking marker' and 'recognition marker' apply to the use to which those markers are put; there is no limitation placed on the construction of the markers by these designations.

Advantageously, embodiments of the invention are able to utilise the fact that a user may be wearing a mask and a cap by incorporating markers in these articles of clothing. In further embodiments, the markers may be incorporated in other clothing or clothing accessories to be worn by a user (such as a hat, glasses). Alternatively, the markers may be incorporated into a support frame worn by the user.

In a further embodiment, the system comprises two 3D displays where each display is intended for a corresponding user. In such a system, the difficulty lies in being able to distinguish the head of the first user from the head of the second user. In such an embodiment, different shaped markers are used to distinguish between different users. In particular, circles may be used as markers for a first user and triangles as markers for a second user. In a further multi-user embodiment, a single display viewable by multiple users may be used. In all of these embodiments, the users' heads are tracked and the output of the display or displays altered in accordance with the tracked position.

Figure 5 is a more detailed illustration of a method 80 of adapting a 3D display in accordance with a determined position of the user in a single user system according to embodiments of the invention. At the initial step 82, the on-axis image of the head is captured and at the following step, step 84, the off-axis image of the head is captured. Both steps 82 and 84 are carried out as described above with reference to Figure 2. In this embodiment, the on-axis and off-axis LEDs are alternately activated. In an alternative embodiment, where the on-axis and off-axis LEDs are illuminated simultaneously, steps 82 and 84 are replaced with the capture of a single image.

For certain embodiments a difference between the on-axis image and the off-axis image is required. In the following step, step 86, a difference image is calculated by subtracting pixel values for the on-image from those of the off-image. This difference image is used later in the process. However, the difference image is only required for certain models of the user's head and therefore is not always necessary. Therefore, this step has been illustrated with a dashed outline in Figure 5.

Once the difference image has been calculated, the process moves to step 88 where the head is detected in the image. At the following step, step 90, the position of the head is calculated and the changes in the position are determined. Therefore, the step 90 has a loop representing the continuous tracking of the user's head. As part of the tracking of the head at step 90, the position of the head is determined (step 92) and this information is used to control the 3D display at step 94.

The step of recognising the head at step 88 (head detection) uses known algorithms for recognising whether a head is present in a particular image. In the embodiment shown, Haar Cascades are used to recognise a face. Other known facial-recognition algorithms may be used instead. The output from the face recognition is used to build the model corresponding to the head model at the co-ordinate position determined by the face recognition algorithm.

Figure 6 illustrates a method 100 of tracking the head required as carried out in step 90 of Figure 5. As described above, the head detection is used to build a first model of the head at a likely position (the 'input model') at the first step, step 102. At the next step, step 104, N models are generated from the input model. In an embodiment, N is equal to 1 536. However, it is to be realised that the number of models will vary depending on any number of parameters such as the processing speed and capabilities of the hardware available for the calculations and the image capture rate (or frame rate) required. It has been found that generating a number of models of around 1 500 creates a reasonable balance between the number of times that the process must be iterated, the resources available, and the accuracy required for a reasonable performance. Furthermore, it is possible to evaluate more than N models by performing the steps detailed below for the N models more than once (i.e. performing steps 106 to 120 more than once, as). The ability to do so will depend on the capability of the hardware concerned and the time available between captured images or sets of images (in the case of a process such as this one based on two images). In this embodiment, these steps are cycled through three times so that a total of about 4 000 models are evaluated for each processed pair of on- and off-images.

Each of the N models is created by performing a minor transformation to the input model. In this embodiment, the transformations correspond to a small change in position (translation or rotation in one of the six degrees of freedom) of the head. In this embodiment, the changes are based on an assumed Gaussian distribution with a mean position estimated at the position assuming a speed of movement of 1 m.s$^{-1}$. Many changes to this constraint to the randomised model generation are possible. For example, a head is less likely to rotate in the plane parallel to the plane of the body and such rotation could be constrained more than transverse movement.

In the embodiment illustrated, parallel processing using a GPU is used to evaluate each of the models in the manner described as follows. In the following step 106 (for n = 1), the processing branches depending on whether a region corresponding to an eye or to a marker is being dealt with. For each of the eyes 54 and 56 (Figure 4), a region corresponding to the eye is identified in step 108 on the basis of the model information. This is then compared to the difference image at step 110 by first performing a threshold conversion and then calculating a pixel value difference between the corresponding region for the original input model and for the new model corresponding to the designated value of n. The details of the threshold conversion are detailed below with reference to Figures 8a and 8b.

In the following step, a weighting is applied to the calculations for that region. Since the region here corresponds to an eye, the weighting applied is 0.4 so that the scores for both eyes together has a maximum value of 0.8.

A similar process is then carried out for regions corresponding to the three markers 59, 60 and 62 (Figure 4). At step 114 the square region corresponding to the particular marker is determined; at step 116 the information for the region is compared to the on-image; and at step 118 a weighting is applied. Since these calculations correspond to markers, the weighting applied is 0.07 for each marker so that the total score for the markers has a maximum value of 0.2.

It is to be realised that the weighting applied can vary. In an embodiment, it has been found that the weighting of 0.8 for the eye regions and 0.2 for the marker regions provides particularly favourable results.

In the final step for n = 1 an overall score between 0 and 1 is calculated for that model at step 120 by combining all of the calculations for each of the regions of that model.

It is to be realised that the steps detailed above for n = 1 are carried out for all models up to n = N. Once this has been done, N scores have been produced and, at step 122 the scores are compared and the best score is used for further processing. It is to be realised however that it is not necessary that the model returned for further processing represent the best of all the models generated. In an alternate embodiment discussed below it is also possible to return one of the better models instead of the best.

At the following step 124 a prediction of the movement of the head is made based on the difference between the best model selected at step 122. In this embodiment, this information is used to generate a vector representing the estimated movement of the user's head and on this basis a new model is generated. The new model is then used as an input model for a further iteration of the process 100 (i.e. used as an input model to step 104).

In this manner a likely position of the head in the captured images is generated. Referring back to Figure 1, if the position of the display 20 relative to the camera 18 is known (which may be determined through a calibration step), then the position of the user's head 14 relative to the display can be calculated. Where the display incorporates a lenticular screen and the display information is divided into a left eye channel and a right eye channel, the display adapter 26 is able to switch the two channels at that point when the user has moved their head past the point where they are able to observe 3D effects in the display (typically about 3 cm to the left or right of the optimal positions (for multi-view lenticular displays).

In further embodiments, other adjustments may be made on the basis of the determined information, depending on the type of 3D display used.

As mentioned above, the step 122 of the process of Figure 6 involves selecting one of the models as the best or preferred model to represent the outcome of the process. It is to be realised that this involves comparing the calculations derived in step 120 for all of the models, if it is necessary to select the actual best model. This is a time consuming process. Since the above process is best implemented on a parallel processing machine, the comparison is all the more so a delay since all of the parallel processing will have to be halted for the comparison.

In an alternative embodiment illustrated in Figure 7, a process 150 for selecting a preferred model is illustrated. In the first step 152 (which would occur after step 120 of Figure 6), a list of all of the scores calculated in step 120 is generated. If the score for a particular model is designated $\sigma$ then this list is:

$$\sigma_1, \sigma_2, \sigma_3, \dots, \sigma_N$$

In the following step, step 154 an indexed list is created by adding the weight of a model to the sum of the weight of each preceding model:

$$(1, \sigma_1); (2, \sigma_1 + \sigma_2); (3, \sigma_1 + \sigma_2 + \sigma_3); \dots; \left(N, \sum_{n=1}^{N} \sigma_n\right)$$

In the following step, step 156, a binary search is performed on the indexed list created in step 154. To implement the binary search a random number between 0 and the sum off all weights $\left(\sum_{n=1}^{N} \sigma_n\right)$ will be generated and the relevant index of the model to be selected is found using binary search for the random number in the indexed list. This is repeated as many times as there are indexed pairs in this embodiment (i.e. N times), although this is not essential to the invention; in a further embodiment, the binary search is conducted for fewer than N random numbers between 0 and the sum of all weights.

Binary search has the advantage of being quick, but the disadvantage that it may not return the best model. However, the search will return a favourable model and it has been found that the gains in speed are significant when compared to using a traditional sorting algorithm which involves comparing each score to all the others. In this embodiment then a favourable model is returned in step 158 instead of returning the best model of step 122 of Figure 6.

In a further refinement to the processing of embodiments of the invention, a threshold conversion is performed for each of the regions corresponding to eyes and markers (see steps 110 and 116 of process 100 of Figure 6). Since, in this embodiment, the captured images are greyscale images, it has been found that an effective comparison between an identified region of a new model and an old model may be made if a threshold conversion is performed first. As mentioned, the regions which correspond to the eyes and the markers are delineated as square regions. It is then assumed that a circular area in the centre of that region is the eye or the marker. If this has been correctly identified, then that central region should have a markedly different colour to the surrounding region (which will represent skin in the case of the eye or clothing in the case of the marker).

In this embodiment therefore, the colour value of the central pixel is read (using the 256 greyscale range with which the colour information is stored in this embodiment). If this integer value is c then a value of c - *1* is taken and all pixels in the region with a colour value less than c - *1* are set equal to white and all pixels in the region with a colour value more than c - *1* are set equal to white. In this manner the image information for the region is converted to black and white using a threshold colour value.

Two results of such threshold conversions are illustrated in Figures 8a and 8b. In Figure 8a the selected region did not correspond to a marker or an eye. In Figure 8b, the selected region corresponds to a marker. As illustrated, the threshold conversion resulting in Figure 8a shows a seemingly random pixel distribution, whereas the conversion resulting in Figure 8b results in an easily recognisable image of the marker. It has been found that a process of head detection and tracking based on such threshold conversions is more accurate than one relying on greyscale images alone.

In the threshold conversion described above, the threshold used for the conversion was c - 1. It is to be realised that other threshold values could be used instead. For example, *c* - 2, *c* - 3 or the subtracting of a suitable integer value from c may be used instead. In a system with excess processing capacity, it may be possible to use more sophisticated algorithms for the threshold conversion too. However, the advantages in this threshold conversion lie primarily in its simplicity; it is not significantly expensive in processing resources to implement, and it yields reliable results.

In an alternative embodiment, a two dimensional model of the head is used. Such an embodiment has the advantage that the calculations involved are less complex, but the distances between the head and the display which such a model can successfully implement are more restrictive. In this embodiment, instead of the three dimensional model illustrated in Figure 4, the processor 28 at step 90 of Figure 5 calculates a "template tracker" model of the head and uses this to track the head, in a known manner.

Only a single image is required for this, and therefore in this embodiment, steps 82 and 84 of Figure 5 are replaced with the capture of a single image of the head illuminated by both the on-axis and off-axis LEDs. The step 86 of calculating the difference image in Figure 5 comprises comparing an image to a subsequently captured image.

The image illuminated by both the on-axis and off-axis LEDs in this embodiment is used to determine whether a recognition marker is present. However, as described above, where the on-axis and off-axis LEDs are activated in sequence, the image corresponding to illumination by the on-axis LEDs is used to recognise the recognition marker. The use of the on-axis image for this purpose has a number of advantages. For example, more of the reflections of the on-axis LEDs 32 (Figure 2) by the marker will be directed into the camera 30 since these light sources are closer to the axis of the camera. Therefore, these reflections will be brighter than that of the light of the off-axis LEDs 34. Furthermore, it is preferable to use the image illuminated by the off-axis LEDs 32 for detecting the head as the off-axis LEDs 34 are less likely to produce bright spots in the image as there will be less specular reflection due to those LEDs.

Figure 9 illustrates the manner in which the display is controlled in step 94. As mentioned, the three dimensional display 20 (Figure 1) is an autostereoscopic display. Such displays display a different image for the right and left eye of a user and use optical elements such as a lenticular overlay to display the different images to the different eyes of the user simultaneously. To do so, the display is divided up into a plurality of alternating left eye and right eye zones. A single right eye zone 162 and a single left eye zone 164 are illustrated in Figure 9.

Figure 9 further illustrates a user 166 having a right eye 172 and a left eye 174. The user further has a recognition marker 170.

The display operates most effectively when the user's right eye 172 is located in the right eye zone 162 and the left eye 174 is located in the left eye zone 164. The user's perception of the display becomes confused if the eyes are located in the incorrect zones and the three dimensional effect is lost. By tracking the position of the user's head and therefore of the eyes relative to the left and right eye zones of the display, the tracking device of embodiments of the invention is able to determine when the left eye enters a right eye zone (and the right eye enters a left eye zone) and then switch the images projected onto the two zones, thereby restoring the three dimensional effect.

Figure 10 illustrates a process 180 of controlling the display as used in embodiments of the invention. At step 182 the position of the head is determined. In this embodiment, the position of the head is represented by parameters in spatial coordinates. This corresponds to step 92 of the process of Figure 5. In the following step, step 184, the position of the head is compared to the known locations of the left and right eye zones (determined during calibrations, see below). In the following step, step 186, a determination is made as to whether the head has moved sufficiently to move the left or right eye of the user out of the corresponding zone.

If the determination in step 186 is that the eyes of the user are in the correct zone, the process will return to step 182 to redetermine the position of the head.

If the determination in step 186 is that the eyes of the user have moved into the opposite zones, the left-eye image and the right eye image are swapped, thereby restoring the three dimensional effect, in step 188. The process will then return to step 182.

In this embodiment, the display 20 is able to operate in both two dimensional and three dimensional modes. As mentioned, if the user's eyes are not located in the correct zones, the three dimensional effect is lost, and the user becomes confused by the images being displayed. In applications such as surgery, it is important that the user's perception of the information being displayed is interfered with as little as possible. Therefore, it is preferable to have the display show a two dimensional image rather than a confused three dimensional image.

Therefore, in the embodiment illustrated, if the processor 28 determines at step 88 (Figure 5) that the head cannot be detected, or the head is lost during the tracking of step 90, the processor will control the display 20 by the display adapter 26 to switch from three dimensional mode to two dimensional mode. In this embodiment, this involves displaying the same image in the left and right eye zones. It is to be realised that the processor 28 will process the on-axis images and determine whether the recognition marker 170 is present to determine whether the two dimensional or three dimensional mode is utilised.

Alternatively, or in addition, the mode may be switched if there is more than one user detected.

It is to be realised that this step of switching display modes is not dependent on the type of model used for the user's head. With reference to Figure 4, the markers 58, 60 and 62 may be designated as recognition markers and the mode of the display switched in accordance with whether the markers are found in the relevant image.

The location of the left and right eye zones of a display are determined by the camera during a calibration step. In this embodiment, the display displays different colours (for example red and green) for all left and right eye zones in a dark room with a wall or other screen located at the user distance. The wall or screen will then reflect the zones back to camera and the processor is able to designate those areas of the captured images as the left and right eye zones.

The terms 'two dimensional' and 'three dimensional' have been used herein, specifically when referring to displays and information. It is to be realised that these are references to a user's perception and are not necessarily references to characteristics of the information and display, or other corresponding noun.

**Claims**

1. A tracking device for tracking a position of a user's head, the device comprising a camera, a radiation source radiating electro-magnetic radiation, and a processor for calculating parameters indicative of the position of the head relative to the camera, wherein the camera is adapted to capture images using illumination provided by the radiation source, wherein the radiation source comprises a source of infrared radiation and the camera comprises a monocular image input, **characterised in that**
   the tracking device further comprises a display adapter for controlling a three dimensional display, wherein the display adapter is adapted to control a three dimensional display in dependence on the calculated variables indicative of the position of the head.

2. The tracking device according to claim 1 wherein the processor is adapted to designate an area of a captured image as the head on the basis of recognising one or more eyes and/or recognising one or more tracking markers attached to the head; and/or
   the processor is adapted to recognise a user according to the presence of a recognition marker.

3. The tracking device according to any preceding claim wherein the processor is adapted to control the display adapter to display three dimensional information when a user is recognised and display two dimensional information when a user is not recognised, wherein the tracking marker or the recognition markers may comprise one or more markers adhered to clothing.

4. The tracking device according to any preceding claim wherein the camera captures successive images and wherein each image corresponds to an illumination of the head by the radiation source, wherein the radiation source may radiate electromagnetic radiation predominantly as infrared radiation, and
   wherein the radiation source may comprise two sets of infrared light sources arranged so that a first set is closer to the camera than a second set, and where the radiation source comprises two sets of infrared light sources arranged so that a first set is closer to the camera than a second set, the the processor may be adapted to compare an image captured when the first set is activated, and the second set is not activated, to an image captured when the second set is activated and the first set is not activated, and/or
   wherein the processor is adapted to process images captured when the first set of infrared light sources is activated for information relating to the recognition and/or tracking markers.

5. The tracking device according to any preceding claim wherein the processor is adapted to generate a model corresponding to the object and evaluate a likelihood that the model represents the object and wherein the processor is adapted to perform the evaluation of the likelihood using a threshold conversion of one or more regions of the image, wherein said model may comprise a three dimensional model of the head,
   and wherein the three dimensional model of the head may comprise three dimensional locations for two eyes and one or more markers,
   and wherein the processor may be adapted to produce a plurality of models arranged in a first list, each model being representative of a change in position of the object, and select one or more models from said plurality of models to correspond to a change in position of the object, wherein the processor is adapted to select the one or more models on the basis of:

   ascribing a weight to each of the plurality of models;
   creating an indexed list of the first list of the plurality of models by indexing each model in accordance with a weight of each model; and
   performing a binary search on the indexed list.

6. The tracking device according to claim 5 wherein the model is a two dimensional model.

7. The tracking device according to any proceeding claim wherein the processor comprises a central processing unit connected to a memory storing a computer program, the central processing unit being adapted to process the computer program to carry out any of the method claims contained herein.

8. A system for displaying three dimensional information comprising a tracking device according to any of claims 1 to 7 and a three dimensional display wherein the three dimensional display is connected to the display adapter, and wherein
the three dimensional display may be an autostereoscopic display for simultaneously displaying a left-eye image and a right-eye image, wherein the display adapter is adapted to swap the left-eye image and the right-eye image in dependence on the location of the user's head relative to the three dimensional display.

9. A method of tracking a position of a user's head comprising:

illuminating the user's head using radiation emitted by a radiation source;
capturing images of the user's head using a camera; wherein the radiation source comprises a source of infrared radiation and the camera comprises a monocular image input,
calculating parameters indicative of the position of the head relative to the camera, the method **characterised by**:

controlling a three dimensional display in dependence on the calculated parameters.

10. The method according to claim 9 comprising designating an area of a captured image as the head on the basis of recognising: one or more eyes of the head,
and wherein the head may be recognised on the basis of recognising one or more tracking markers attached to the head,
and wherein the method may further comprise recognising a user according to the presence of a recognition marker,
and wherein the method may further comprise displaying three dimensional information when a user is recognised and displaying two dimensional information when a user is not recognised, and wherein the tracking markers and/or the recognition markers may comprise one or more markers adhered to clothing,
and wherein the method may further comprise capturing successive images wherein each image corresponds to an illumination of the head by the radiation source,
and wherein the radiation source may radiate electromagnetic radiation predominantly as infrared radiation,
and wherein the radiation source may comprise two sets of infrared light sources arranged so that a first set is closer to the camera than a second set,
and wherein the method may further comprise comparing an image captured when the first set is activated, and the second set is not activated, to an image captured when the second set is activated and the first set is not activated,
and wherein the method may further comprise processing images captured when the first set of infrared light sources is activated for information relating to the recognition and/or tracking markers,
and wherein the method may further comprise generating a model corresponding to the object and evaluating a likelihood that the model represents the object and wherein the evaluation of the likelihood involves using a threshold conversion of one or more regions of the image.

11. The method according to claim 10, wherein said model comprises a three dimensional model of the head,
and wherein the three dimensional model of the head may comprise three dimensional locations for two eyes and one or more markers,
and wherein the method may further comprise producing a plurality of models arranged in a first list, each model being representative of a change in position of the object, and selecting one or more models from said plurality of models to correspond to a change in position of the object, wherein the processor is adapted to select the one or more models on the basis of:

ascribing a weight to each of the plurality of models;
creating an indexed list of the first list of the plurality of models by indexing each model in accordance with a weight of each model; and
performing a binary search on the indexed list.

12. The method according to claim 11 wherein the model is a two dimensional model.

13. The method according to any of claims 9 to 12 wherein the three dimensional display is an autostereoscopic display for simultaneously displaying a left-eye image and a right-eye image, and wherein controlling the three dimensional display in dependence on the calculated parameters comprises swapping the left-eye image and the right-eye image in dependence on the location of the user's head relative to the three dimensional display.

Fig 1

Fig 2

Fig 3

Fig 7

Fig 8a

Fig 8b

Fig 4

Fig 5

Fig 6

Fig 9

Fig 10

Europäisches
Patentamt

European
Patent Office

Office européen
des brevets

# EUROPEAN SEARCH REPORT

Application Number

EP 14 15 1771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN YONG-SHEN ET AL: "Video-based realtime eye tracking technique for autostereoscopic displays", PROCEEDINGS OF THE CONFERENCE ON ARTIFICIAL INTELLIGENCE ANDAPPLICATIONS, XX, XX, 1 November 2000 (2000-11-01), pages 188-193, XP002956203, | 1,2,4, 7-9 | INV. G06T7/20 |
| Y | * abstract * * figure 1 * * sections "1 Introduction", "2.1.2 Tracking Using Template Matching", "2.1.3 Eye Tracking and Face Tracking" * ----- | 1,2,4, 7-9,13 | |
| Y | MORIMOTO C H ET AL: "Pupil detection and tracking using multiple light sources", IMAGE AND VISION COMPUTING, ELSEVIER, GUILDFORD, GB, vol. 18, no. 4, 1 March 2000 (2000-03-01), pages 331-335, XP008126446, ISSN: 0262-8856, DOI: 10.1016/S0262-8856(99)00053-0 [retrieved on 2000-02-17] * abstract; figures 1,3 * * sections "2. System configuration", "3. Pupil detection algorithms" * * page 333, right-hand column, lines 40-46 * ----- -/-- | 1,2,4, 7-9 | TECHNICAL FIELDS SEARCHED (IPC) G06T H04N |

The present search report has been drawn up for all claims

| Place of search | Date of completion of the search | Examiner |
|---|---|---|
| Munich | 30 April 2014 | Eckert, Lars |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 14 15 1771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | REINHARD BÖRNERBORNER ET AL: "A Family of Single-User Autostereoscopic Displays with Head-Tracking Capabilities", IEEE TRANSACTIONS ON CIRCUITS AND SYSTEMS FOR VIDEO TECHNOLOGY, IEEE SERVICE CENTER, PISCATAWAY, NJ, US, vol. 10, no. 2, 1 March 2000 (2000-03-01), XP011014026, ISSN: 1051-8215 * abstract * * page 234, right-hand column, lines 24-31 * * page 239, left-hand column, lines 27-31 * * section "IV.B. Flat LC-Monitor with Tracked Raster Plate" * * page 242, right-hand column, lines 26-36 * ----- | 8,13 | |

TECHNICAL FIELDS
SEARCHED      (IPC)

The present search report has been drawn up for all claims

| Place of search | Date of completion of the search | Examiner |
|---|---|---|
| Munich | 30 April 2014 | Eckert, Lars |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)